# EUROPEAN PATENT APPLICATION

(11) **EP 3 528 561 A1**
(43) Date of publication of application: **21.08.2019**
(21) Application number: 18157009.4
(22) Date of filing: 15.02.2018
(51) Int. Cl.: H04W 68/00, H04W 72/04, H04W 74/08

(54) **USER EQUIPMENT AND BASE STATION INVOLVED IN IMPROVED PAGING PROCEDURES**

(71) Applicant: Panasonic Intellectual Property Corporation of America, Torrance, CA 90503 (US)
(72) Inventor: SIVAVAKEESAR, Sivapathalingham, 63225 Langen (DE); SUZUKI, Hidetoshi, Chuo-ku,, Osaka 540-6207 (JP); TAO, Ming-Hung, 63225 Langen (DE); SHAH, Rikin, 63225 Langen (DE)
(74) Representative: Grünecker Patent- und Rechtsanwälte PartG mbB

(57) **Abstract**

The present disclosure relates to a user equipment (UE) comprising a receiver that receives a paging message from a base station that controls a radio cell of a mobile communication system in which the user equipment is located. The paging message comprises information on a random access preamble to be used by the user equipment when performing a random access procedure with the base station. The UE further comprises a transmitter that transmits the random access preamble to the base station as part of a random access procedure performed by the user equipment with the base station.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the next release (Release 15) of technical specifications for the next generation cellular technology, which is also called fifth generation (5G). At the 3GPP Technical Specification Group (TSG) Radio Access network (RAN) meeting #71 (Gothenburg, March 2016), the first 5G study item, "Study on New Radio Access Technology" involving RAN1, RAN2, RAN3 and RAN4 was approved and is expected to become the Release 15 work item that defines the first 5G standard. The aim of the study item is to develop a "New Radio (NR)" access technology (RAT), which operates in frequency ranges up to 100 GHz and supports a broad range of use cases, as defined during the RAN requirements study (see e.g. 3GPP TR 38.913 "Study on Scenarios and Requirements for Next Generation Access Technologies", current version 14.3.0 available at www.3gpp.org and incorporated herein its entirety by reference).

One objective is to provide a single technical framework addressing all usage scenarios, requirements and deployment scenarios defined in TR 38.913, at least including enhanced mobile broadband (eMBB), ultra-reliable low-latency communications (URLLC), massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC may include scenarios with large number of devices with non-time critical data transfers such as smart wearables and sensor networks. The services eMBB and URLLC are similar in that they both demand a very broad bandwidth, however are different in that the URLLC service requires ultra-low latencies.

A second objective is to achieve forward compatibility. Backward compatibility to Long Term Evolution (LTE, LTE-A) cellular systems is not required, which facilitates a completely new system design and/or the introduction of novel features.

The fundamental physical layer signal waveform will be based on OFDM, with potential support of a non-orthogonal waveform and multiple access. For instance, additional functionality on top of OFDM such as DFT-S-OFDM, and/or variants of DFT-S-OFDM, and/or filtering/windowing is further considered. In LTE, CP-based OFDM and DFT-S-OFDM are used as waveform for downlink and uplink transmission, respectively. One of the design targets in NR is to seek a common waveform as much as possible for downlink, uplink and sidelink.

Besides the waveform, some basic frame structure(s) and channel coding scheme(s) will be developed to achieve the above-mentioned objectives. The study shall also seek a common understanding on what is required in terms of radio protocol structure and architecture to achieve the above-mentioned objectives. Furthermore, the technical features which are necessary to enable the new RAT to meet the above-mentioned objectives shall be studied, including efficient multiplexing of traffic for different services and use cases on the same contiguous block of spectrum.

Existing cellular network architectures are relatively monolithic, with a transport network that facilitates mobile traffic to user devices. They may not be flexible enough to so support wider ranges of performance and scalability requirements.

Since the standardization for the NR of 5^{th} Generation systems of 3GPP is at the very beginning, there are several issues that remain unclear.

### SUMMARY

Non-limiting and exemplary embodiments facilitate providing improved procedures to optimize how the user equipment transitions from an inactive to a connected state, to optimize how changes of an already-configured RAN notification area are handled, and to optimize the configuration of RAN notification areas for UEs based on additional information.

In one general first aspect, the techniques disclosed here feature a user equipment comprising a receiver and transmitter. The receiver receives a paging message from a base station that controls a radio cell of a mobile communication system in which the user equipment is located, the paging message indicating a random access preamble to be used by the user equipment when performing a random access procedure with the base station. The transmitter transmits the indicated random access preamble to the base station as part of a random access procedure performed by the user equipment with the base station.

In one general first aspect, the techniques disclosed here feature a method comprising the following steps performed by a user equipment. The UE receives a paging message from a base station that controls a radio cell of a mobile communication system in which the user equipment is located, the paging message indicating a random access preamble to be used by the user equipment when performing a random access procedure with the base station. The UE transmits the indicated random access preamble to the base station as part of a random access procedure performed by the user equipment with the base station.

In one general first aspect, the techniques disclosed here feature a base station comprising a transmitter and receiver. The transmitter transmits a paging message to a user equipment which is located in a radio cell of a mobile communication system that is controlled by the base station, wherein the paging message indicates a random access preamble to be used by the user equipment when performing a random access procedure with the base station. The receiver receives the indicated random access preamble from the user equipment as part of a random access procedure performed by the user equipment with the base station.

In one general second aspect, the techniques disclosed here feature a user equipment comprising a receiver. The receiver receives a paging message from a base station that controls a radio cell of a mobile communication system in which the user equipment is located, the paging message comprising a trigger for the user equipment to obtain updated information on a radio access network notification area within which the user equipment is located. The receiver in response to the received trigger performs a procedure to obtain the updated information on the radio access network notification area.

In one general second aspect, the techniques disclosed here feature a method comprising the following steps performed by a user equipment. The UE receives a paging message from a base station that controls a radio cell of a mobile communication system in which the user equipment is located, the paging message comprising a trigger for the user equipment to obtain updated information on a radio access network notification area within which the user equipment is located. The UE performs a procedure to obtain the updated information on the radio access network notification area.

In one general second aspect, the techniques disclosed here feature a base station that comprises a transmitter. The transmitter transmits a paging message to a user equipment which is located in a radio cell of a mobile communication system that is controlled by the base station, the paging message comprising a trigger for the user equipment to obtain updated information on a radio access network notification area within which the user equipment is located. The transmitter transmits the updated information on the radio access network notification area to the user equipment.

In one general third aspect, the techniques disclosed here feature a user equipment that comprises a transmitter. The transmitter transmits to a target base station history information, wherein the user equipment is located in a radio cell controlled by a source base station and performs a handover procedure from the source base station to the target base station, wherein the history information provides information with respect to one or more radio access network notification areas, RNAs, in which the user equipment was located.

In one general third aspect, the techniques disclosed here feature a method comprising the following steps performed by a user equipment. The UE transmits to a target base station history information, wherein the user equipment is located in a radio cell controlled by a source base station and performs a handover procedure from the source base station to the target base station, wherein the history information provides information with respect to one or more radio access network notification areas, RNAs, in which the user equipment was located.

In one general third aspect, the techniques disclosed here feature a base station with a transmitter that transmits history information to a target base station, wherein a handover procedure is performed for handing over a user equipment from the base station, as the source base station, to the target base station, wherein the history information provides information with respect to one or more radio access network notification areas, RNAs, in which the user equipment was located.

It should be noted that general or specific embodiments may be implemented as a system, a method, an integrated circuit, a computer program, a storage medium, or any selective combination thereof.

Additional benefits and advantages of the disclosed embodiments will be apparent from the specification and Figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: shows an exemplary user and control plane architecture for the LTE eNB, gNB, and UE;
- **Fig. 3**: illustrates the messages exchanged between an eNB and a UE when performing a contention-based RACH procedure;
- **Fig. 4**: illustrates the messages exchanged between an eNB and a UE when performing a contention-free RACH procedure;
- **Fig. 5**: illustrates three different types of bandwidth parts,
- **Fig. 6**: illustrates the system information acquisition message exchange as currently discussed for 5g NR;
- **Fig. 7**: illustrates three RAN-based notification areas, respectively being composed of several gNBs, as well as a UE connected to gNB1 of area 1,
- **Fig. 8**: illustrates the exemplary and simplified structure of a UE and an eNB,
- **Fig. 9 and 10**: illustrate a transmission of paging message from the gNB to the UE, according to variants of the first embodiment,
- **Fig. 11**: is a sequence diagram of the UE and base station behavior according to one variant of the first embodiment,
- **Fig. 12**: illustrates a message exchange between the gNB and the UE according to one exemplary variant of the first embodiment,
- **Fig. 13 and 14**: illustrate a transmission of paging message from the gNB to the UE, according to variants of the second embodiment,
- **Fig. 15**: is a sequence diagram of the UE and base station behavior according to one variant of the second embodiment,
- **Fig. 16, 17 and 18**: illustrate message exchanges between the gNB and the UE according to three different exemplary variants of the second embodiment,
- **Fig. 19 and 20**: are sequence diagrams of the UE and base station behavior according to variants of the third embodiment, and
- **Fig. 21**: illustrates a message exchange between the gNB and the UE according to an exemplary variant of the third embodiment.

### DETAILED DESCRIPTION

### Basis of the present disclosure

### 5G NR system architecture and protocol stacks

As presented in the background section, 3GPP is working at the next release for the 5^{th} generation cellular technology, simply called 5G, including the development of a new radio access technology (NR) operating in frequencies ranging up to 100 GHz. 3GPP has to identify and develop the technology components needed for successfully standardizing the NR system timely satisfying both the urgent market needs and the more long-term requirements. In order to achieve this, evolutions of the radio interface as well as radio network architecture are considered in the study item "New Radio Access Technology". Results and agreements are collected in the Technical Report TR 38.804 v14.0.0, incorporated herein in its entirety by reference.

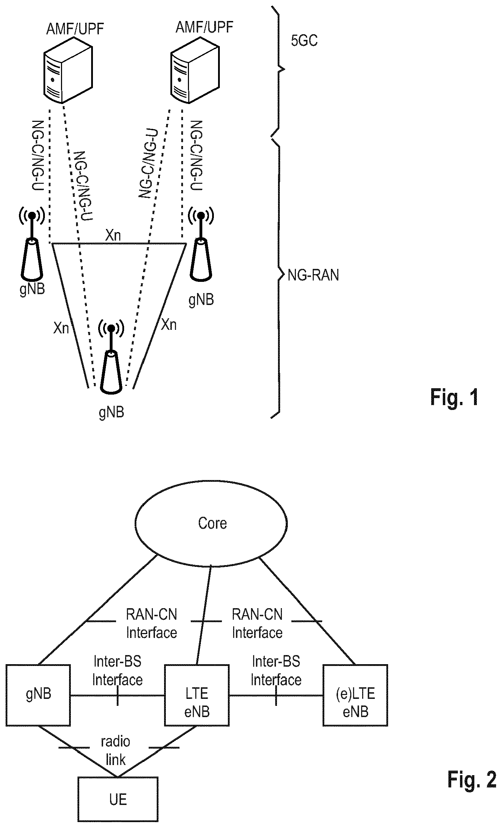

Among other things, there has been a provisional agreement on the overall system architecture. The NG-RAN (Next Generation - Radio Access Network) consists of gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1**, based on TS 38.300 v. 15.0.0, section 4 incorporated herein by reference.

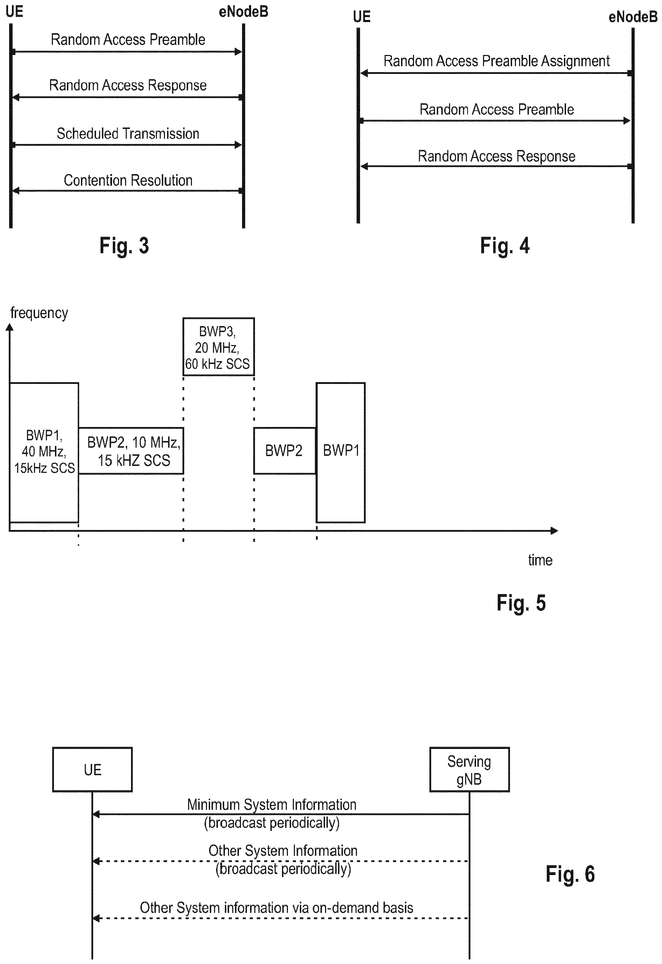

Various different deployment scenarios are currently being discussed for being supported, as reflected e.g. in 3GPP TR 38.801 v14.0.0 incorporated herein by reference in its entirety. For instance, a non-centralized deployment scenario (section 5.2 of TR 38.801; a centralized deployment is illustrated in section 5.4) is presented therein, where base stations supporting the 5G NR can be deployed. **Fig. 2** illustrates an exemplary non-centralized deployment scenario and is based on Figure 5.2.-1 of said TR 38.801, while additionally illustrating an LTE eNB as well as a user equipment (UE) that is connected to both a gNB and an LTE eNB. As mentioned before, the new eNB for NR 5G may be exemplarily called gNB.

An eLTE eNB, as exemplarily defined in TR 38.801, is the evolution of an eNB that supports connectivity to the EPC (Evolved Packet Core) and the NGC (Next Generation Core).

The user plane protocol stack for NR is currently defined in TS 38.300 v15.0.0, section 4.4.1. The PDCP (Packet Data Convergence Protocol), RLC (Radio Link Control) and MAC (Medium Access Control) sublayers are terminated in the gNB on the network side. Additionally, a new access stratum (AS) sublayer (SDAP, Service Data Adaptation Protocol) is introduced above PDCP as described in sub-clause 6.5 of TS 38.300. The control plane protocol stack for NR is defined in TS 38.300, section 4.4.2. An overview of the Layer 2 functions is given in sub-clause 6 of TS 38.300. The functions of the PDCP, RLC and MAC sublayers are listed in respectively sub-clauses 6.4, 6.3, and 6.2 of TS 38.300. The functions of the RRC layer are listed in sub-clause 7 of TS 38.300. The mentioned sub-clauses of TS 38.300 are incorporated herein by reference.

The new NR layers exemplarily assumed for the 5G systems may be based on the user plane layer structure currently used in LTE(-A) communication systems.

As identified in TR 38.913, use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC requires high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may require a shorter symbol duration (and thus larger subcarrier spacing) and/or fewer symbols per scheduling interval (aka, TTI) than an mMTC service. Furthermore, deployment scenarios with large channel delay spreads require a longer CP duration than scenarios with short delay spreads. The subcarrier spacing should be optimized accordingly to retain the similar CP overhead. In 3GPP RAN1#84bis meeting (Busan, April 2016), it was agreed that it is necessary for NR to support more than one value of subcarrier spacing. Correspondingly, subcarrier spacing of 15kHz, 30kHz, 60kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain. Some definitions have already been achieved as apparent from 3GPP TS 38.211 v15.0.0 incorporated herein by reference.

### Random Access Channel procedure & prioritized random access procedure

No final agreement has been reached with regard to the RACH (Random Access Channel) procedure (or simply random access procedure) in 5G NR. As described in section 9.2 of TR 38.804 v14.0.0, incorporated herein by reference, the NR RACH procedure may support both contention-based and contention-free random access, in the same or similar manner as defined for LTE. Also, the design of the NR RACH procedure shall support a flexible message-3 size, similar as in LTE although its size might be quite limited.

The LTE RACH procedure will be described in the following in more detail, with reference to **Fig. 3 and 4**. A mobile terminal in LTE can only be scheduled for uplink transmission, if its uplink transmission is time synchronized. Therefore, the Random Access Channel (RACH) procedure plays an important role as an interface between non-synchronized mobile terminals (UEs) and the orthogonal transmission of the uplink radio access. For instance, the Random Access in LTE is used to achieve uplink time synchronization for a user equipment which either has not yet acquired, or has lost, its uplink synchronization. Once a user equipment has achieved uplink synchronization, the eNodeB can schedule uplink transmission resources for it. One scenario relevant for random access is where a user equipment in RRC_CONNECTED state, handing over from its current serving cell to a new target cell, performs the Random Access Procedure in order to achieve uplink time-synchronization in the target cell.

LTE offers two types of random access procedures allowing access to be either contention based, i.e. implying an inherent risk of collision, or contention free (non-contention based). A detailed description of the LTE random access procedure can be also found in 3GPP TS 36.321, section 5.1. v14.1.0 incorporated herein by reference.

In the following the LTE contention-based random access procedure is being described in more detail with respect to **Fig. 3**. This procedure consists of four "steps". First, the user equipment transmits a random access preamble on the Physical Random Access Channel (PRACH) to the eNodeB (i.e. message 1 of the RACH procedure). After the eNodeB has detected a RACH preamble, it sends a Random Access Response (RAR) message (message 2 of the RACH procedure) on the PDSCH (Physical Downlink Shared Channel) addressed on the PDCCH with the (Random Access) RA-RNTI identifying the time-frequency slot in which the preamble was detected. If multiple user equipment transmitted the same RACH preamble in the same PRACH resource, which is also referred to as collision, they would receive the same random access response message. The RAR message may convey the detected RACH preamble, a timing alignment command (TA command) for synchronization of subsequent uplink transmissions, an initial uplink resource assignment (grant) for the transmission of the first scheduled transmission and an assignment of a Temporary Cell Radio Network Temporary Identifier (T-CRNTI). This T-CRNTI is used by eNodeB to address the mobile(s) whose RACH preamble was detected until the RACH procedure is finished, since the "real" identity of the mobile at this point is not yet known by the eNodeB.

The user equipment monitors the PDCCH for reception of the random access response message within a given time window (e.g. termed RAR time window), which is configured by the eNodeB. In response to the RAR message received from the eNodeB, the user equipment transmits the first scheduled uplink transmission on the radio resources assigned by the grant within the random access response. This scheduled uplink transmission conveys the actual random access procedure message like for example an RRC Connection Request, RRC Resume Request or a buffer status report.

In case of a preamble collision having occurred in the first message of the RACH procedure, i.e. multiple user equipment have sent the same preamble on the same PRACH resource, the colliding user equipment will receive the same T-CRNTI within the random access response and will also collide in the same uplink resources when transmitting their scheduled transmission in the third step of the RACH procedure. In case the scheduled transmission from one user equipment is successfully decoded by eNodeB, the contention remains unsolved for the other user equipment(s). For resolution of this type of contention, the eNode B sends a contention resolution message (a fourth message) addressed to the C-RNTI or Temporary C-RNTI. This concludes the procedure.

**Fig. 4** is illustrating the contention-free random access procedure of 3GPP LTE, which is simplified in comparison to the contention-based random access procedure. The eNodeB provides in a first step the user equipment with the preamble to use for random access so that there is no risk of collisions, i.e. multiple user equipment transmitting the same preamble. Accordingly, the user equipment is subsequently sending the preamble which was signaled by eNodeB in the uplink on a PRACH resource. Since the case that multiple UEs are sending the same preamble is avoided for a contention-free random access, essentially, a contention-free random access procedure is finished after having successfully received the random access response by the UE.

A similar or same RACH procedure as just explained in connection with Fig. 3 and 4 could be adopted in the future for the new radio technology of 5G. The current agreements on the random access procedure for 5G NR are captured in the 3GPP Technical Specification 38.321 v15.0.0, section 5.1 "Random Access Procedure" incorporated herein by reference.

Furthermore, 3GPP is also studying a two-step RACH procedure for 5G NR, where a message 1, that corresponds to messages 1 and 3 in the four-step RACH procedure, is transmitted at first. Then, the gNB will respond with a message 2, corresponding to messages 2 and 4 of the LTE RACH procedure. Due to the reduced message exchange, the latency of the two-step RACH procedure may be reduced compared to the four-step RACH procedure. The radio resources for the messages are optionally configured by the network.

Moreover, 3GPP has generally agreed that NR communication systems should support prioritization of the random access, however without agreeing on the details on how this can be achieved in detail.

In contrast, in LTE systems the UEs perform basically the same random access procedure with the same set of configured parameters, e.g. a common backoff value, a common power ramping parameter and the radio resources for the PRACH (Physical Random Access Channel). Thus, a UE performs the random access procedure without any consideration of the purpose of the access request, i.e. why the random access procedure is performed in the first place.

In contrast thereto, prioritization of the random access procedure of different UEs is motivated by the need to support a broader set of service requirements in future NR systems and also by the desire to improve the robustness of the system. In more detail, different user services currently handled by the UE can also benefit from the random access prioritization. For instance, random access triggered for the URLLC service would benefit from having a fast access with a lower delay than needed for random access procedure triggered in the context of an eMBB service.

Further, different types of random access events have different access delay requirements, such that random access requests triggered in the UE by certain random access (RA) events should have higher priority than others. For instance, an RA event that is triggered by an RRC Connection Re-establishment should be handled with a shorter delay, than e.g. an RA event triggered by a UE trying to get initial access. Similarly, a UE in RRC_Connected state trying to use the random access procedure to get synchronized again could be given a higher priority than e.g. a UE in RRC_ldle trying to use random access to get initial access.

The following random access events are currently defined:
- **(Event 1):** Initial access from RRC_IDLE;
- **(Event 2):** RRC Connection Re-establishment procedure;
- **(Event 3):** Handover;
- **(Event 4):** DL data arrival during RRC_CONNECTED requiring random access procedure, e.g. when UL synchronisation status is "non-synchronised";
- **(Event 5):** UL data arrival during RRC_CONNECTED requiring random access procedure, e.g. when UL synchronisation status is "non-synchronised" or there are no PUCCH resources for SR available.
- **(Event 6):** Transition from RRC_INACTIVE to RRC_CONNECTED
- **(Event 7):** Beam Recovery

Events 1 to 6 that trigger a random access procedure are already known from LTE system, whereas Event 7 (beam recovery) is currently being discussed to be newly introduced for 5G NR systems.

There have been recent agreements in that UE will apply a prioritized RACH procedure (if configured) for events 3 and 7, i.e. for handovers using contention-based access and for beam failure recovery. The set of parameters for prioritization may include the power ramping step as well as the back-off parameter. The back-off parameter is used to determine the time a UE has to wait before transmitting another preamble, i.e. allows controlling a delay between two subsequent preamble transmissions. For instance, in case a collision with another UE occurs, the UE has to back-off for a certain time period before transmitting the next preamble. Prioritization via the back-off parameter allows e.g. adapting the preamble transmission delay so as to mitigate congestion.

Transmission of the preamble involves a power ramping function, according to which the transmission power with which the preamble is transmitted by the UE is successively increased with each failed preamble transmission attempt. An initial preamble power parameter as well as a power ramping step parameter is provided in said respect, the latter one defining the power increase of each power ramping instance. Prioritization via the power ramping parameters allows to overcome uplink interference, mainly for the preamble transmission of the random access procedure, thus increasing the possibility of a successful preamble transmission which may reduce the overall time delay for the random access procedure.

### Bandwidth Parts

NR systems will support much wider maximum channel bandwidths than LTE's 20 MHz (e.g. 100s of MHz). Wideband communication is also supported in LTE via carrier aggregation (CA) of up to 20 MHz component carriers. By defining wider channel bandwidths in NR, it is possible to dynamically allocate frequency resources via scheduling, which can be more efficient and flexible than the Carrier Aggregation operation of LTE, whose activation/deactivation is based on MAC Control Elements. Having single wideband carrier also has merit in terms of low control overhead as it needs only single control signaling (Carrier Aggregation requires separate control signaling per each aggregated carrier).

Moreover, like LTE, NR may also support the aggregation of multiple carriers via carrier aggregation or dual connectivity.

Since UEs are not always demanding high data rates, the use of a wide bandwidth may incur higher idling power consumption both from RF and baseband signal processing perspectives. In this regards, a newly developed concept of bandwidth parts for NR provides a means of operating UEs with smaller bandwidths than the configured channel bandwidth, so as to provide an energy efficient solution despite the support of wideband operation. This low-end terminal, which cannot access the whole bandwidth for NR, can benefit therefrom.

A bandwidth part (BWP) is a subset of the total cell bandwidth of a cell, i.e. the location and number of contiguous physical resource blocks (PRBs). It may be defined separately for uplink and downlink. Furthermore, each bandwidth part can be associated with a specific OFDM numerology, e.g. with a subcarrier spacing and cyclic prefix. For instance, bandwidth adaptation is achieved by configuring the UE with BWP(s) and telling the UE which of the configured BWPs is currently the active one.

As presently foreseen, a BWP is configured only for a UE in RRC_Connected state, i.e. other than an initial BWP (e.g. one for UL and one for DL), a BWP only exists for UEs in connected state. To support the initial data exchange between the UE and the network, e.g. during the process of moving a UE from RRC_IDLE or RRC_INACTIVE state to RRC_CONNECTED state, the initial DL BWP and initial UL BWP are configured in the minimum SI.

Although the UE can be configured with more than one BWP, the UE has only one active DL BWP at a time.

Switching between configured BWPs may be achieved by means of downlink control information (DCIs).

For the Primary Cell (PCell), the initial BWP is the BWP used for initial access and the default BWP is the initial one unless explicitly configured. For a Secondary Cell (SCell), the initial BWP is always explicitly configured, and a default BWP may also be configured. When a default BWP is configured for a serving cell, the expiry of an inactivity timer associated to that cell switches the active BWP to the default one.

Typically, it is envisaged that the downlink control information does not contain the BWP ID.

**Fig. 5** illustrates a scenario where three different BWPs are configured, BWP₁ with a frequency bandwidth of 40 MHz and a subcarrier spacing of 15 kHz, BWP₂ with a width of 10 MHz and a subcarrier spacing of 15 kHz, and BWP₃ with a width of 20 MHz and subcarrier spacing of 60 kHz.

### LTE System Information Acquisition

In LTE, system information is structured by means of system information blocks (SIBs), each of which contains a set of functionally related parameters. The MIB (master information block) includes a limited number of the most frequently transmitted parameters which are essential for an initial access of the UE to the network. There are system information blocks of different types SIB1-SIB18 currently defined in LTE to convey further parameters, e.g. SIB1 includes parameters needed to determine if a cell is suitable for cell selection, as well as information about the time domain scheduling of the other SIBs, SIB2 for example includes common and shared channel information.

Three types of RRC (Radio Resource Control) messages can be used to transfer the system information, the MIB, the SIB1 message and SI messages. SIBs other than SIB1 are transmitted within system information messages (SI messages), of which there are several and which include one or more SIBs which have the same scheduling requirements (e.g. the same transmission periodicity). Depending on the content of the SI messages, the UE has to acquire different SI messages in idle and connected states; e.g. the 3^{rd} SI message with SIB5 (inter-frequency cell reselection information) needs to be acquired in idle state only.

More information on the system information can be found in the 3GPP Technical Specification TS 36.331 v14.4.0, section 5.2 "System information" incorporated herein in its entirety by reference.

### NR System Information Acquisition

In 5G NR it is currently envisioned (although not finally agreed upon) that system information is generally divided into minimum system information and other system information. The minimum system information is periodically broadcast and comprises basic information required for initial access to a cell (such as System Frame Number, list of PLMN, Cell ID, cell camping parameters, RACH parameters). The minimum system information may further comprise information for acquiring any other SI broadcast periodically or provisioned via on-demand basis, e.g. suitable scheduling information in said respect. The scheduling information may for instance include as necessary the SIB type, validity information, SI periodicity and SI-window information. Correspondingly, the other system information shall encompass everything that is not broadcast in the minimum system information, e.g. cell-reselection neighbouring cell information.

The other SI may either be broadcast or provisioned in a dedicated manner, either triggered by the network or upon request from the UE, as illustrated in **Fig. 6**. The other SI can be broadcast at a configurable periodicity and for a certain duration. It is a network decision whether the other SI is broadcast or delivered through dedicated UE-specific RRC signaling.

For the other SI that is actually required by the UE, before the UE sends the other SI request, the UE needs to know whether it is available in the cell and whether it is broadcast or not. For the UE in RRC_CONNECTED state, dedicated RRC signaling can be e.g. used for the request and delivery of the other SI.

In legacy LTE, the UE is always required to (re-)acquire system information when cell change occurs, and the UE is also required to re-acquire all the system information when the system information is changed (e.g. indicated by paging or an incremented, i.e. changed, value tag). For the new system in 5G NR, it is generally desired to reduce the need to re-acquire system information by identifying stored system information with a specific index/identifier, which is broadcast together with the minimum system information. It is assumed that some system information valid in one cell may be valid also in other cells. For example, the common radio resource configuration, the Access Class barring information, the UL carrier frequency and bandwidth, and the MBSFN (Multimedia Broadcast Single-Frequency Network) subframe configuration may be valid among multiple adjacent cells.

There are however no final agreements with regard to the system information in 5G NR.

### Mobility in RRC_Inactive - Radio Access Network, RAN, notification areas

The RRC in NR 5G, as currently defined in section 5.5.2 of TR 38.804 v14.0.0 incorporated herein by reference, supports the following three states, RRC_IDLE, RRC_INACTIVE, and RRC_CONNECTED (independent from the specific, capitalized, name given in 3GPP, these three states can be functionally being distinguished by respectively referring to same as idle state, inactive state, and connected state). A new RRC state, RRC_INACTIVE, is defined for the new radio technology of 5G, so as to provide benefits when supporting a wider range of services such as the eMBB (enhanced Mobile Broadband), mMTC (massive Machine Type Communications) and URLLC (Ultra-Reliable and Low-Latency Communications) which have very different requirements in terms of signalling, power saving, latency etc. According to recent 3GPP agreements, a user equipment in RRC Inactive state does not support small uplink data transmissions, such that it will be necessary to perform a full state transition to the RRC connected state to make a data transmission.

For the UE in RRC Inactive state the connection (both for user plane and control plane) may be maintained with RAN and the core network. The core network is not aware of the UE being in RRC_Inactive state, and still considers the UE to be e.g. in RRC Connected state. In addition, mobility for user equipments in said inactive state is based on so called radio access network, RAN,-based notification areas (in short RNAs). The radio access network should be aware of the current RNA the user equipment is located in, and the user equipment may assist the gNB to track the UE moving among various RNAs. The RNA can be UE specific. In RRC_Inactive the last serving gNB node may keep the UE context and the UE-associated NG connection with the serving AMF and UPF. If the last serving gNB receives downlink data from the UPF or downlink signaling from the AMF while the UE is in RRC_Inactive, it pages in the cells corresponding to the RNA and may send paging to neighbour gNB(s) of the RNA including cells of neighbour gNB(s). The UE registration area is taken into account by the NG-RAN node when configuring the RAN-based notification area. Typically, the RNA is UE-specific and configured by the anchor gNB based on information received from other entities, e.g. the AMF, neighbour cells etc. The anchor gNB is the gNB that keeps the UE AS contexts and also maintains the NG-U tunnel.

If the UE accesses a gNB other than the last serving gNB, the receiving gNB triggers a retrieve-UE-Context procedure to get the UE context from the last serving gNB and may also trigger a Data Forwarding procedure. Upon successful context retrieval, the receiving gNB becomes the serving gNB and it may further trigger the NGAP Path Switch Request procedure.

A UE in the RRC_Inactive state may initiate the RNA update procedure when it moves out of the configured RNA. When receiving RNA updated request from the UE, the receiving gNB may decide to send the UE to RRC_Inactivate state, move the UE into RRC_Connected state, or send the UE to RRC_Idle.

An RNA can cover a single or multiple cells and can be smaller than the core network area, used for tracking a UE in RRC idle state. While the UE in RRC inactive state stays within the boundaries of the current RNA, it may not have to update its location with the RAN (e.g. gNB) (although it may update its location for other reasons). Correspondingly however, when leaving its current RNA (e.g. and moving to another RNA), the UE may have to update its location with the RAN. A RNA update (RNAU) may also be periodically sent by the UE.

There is not yet a final agreement on how the RNAs are configured and defined. Sub-clause 9.2.2 of TS 38.300 v15.0.0, provides the current state of the agreements for Mobility in RRC_Inactive, including the RAN-based Notification areas, the state transitions involved, the RNA update procedure, all of which is incorporated herein by reference.

For instance, the RNA can be configured via a list of cells that constitute the RNA. Further, the RNA can be defined by a list of RAN areas, where the UE is provided with at least one RNA area ID. The RAN area is a subset of a CN Tracking Area. In said case, a radio cell may broadcast the RAN area ID in the system information such that the UE knows which RNA the cell belongs to. Still alternatively, the RNA can be defined in the form of a List of TAI (Tracking Area IDs).

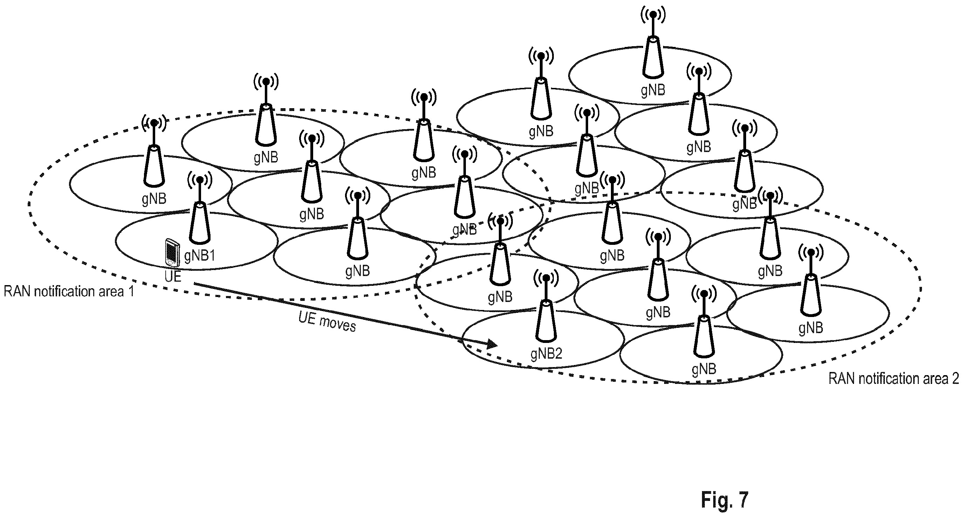

**Fig. 7** illustrates an example scenario where there are several RNAs, respectively composed of several gNBs. The UE is connected to a gNB1 of RNA1, currently defined for the UE, with gNB1 being the anchor gNB for this RNA1. The UE may move within RNA1, i.e. between the different radio cells of the RNA, without having to perform an update procedure of the RNA, and is still reachable by gNB1 (paging Xn paging)

According to one option, the RAN-based notification area is defined through a list of radio cells that compose the RNA. The UE is provided with an explicit list of cells (e.g. via dedicated signaling, i.e. signaling directly addressed to the UE, e.g. an RRC connection reconfiguration message), such that the UE can determine in which current RNA it is based on the current cell. According to another option, the RNA is defined by several RAN areas IDs , and each cell, specifically the gNB, broadcasts (at least one) RAN ID (e.g. in its system information; alternatively or additionally, this information can be transmitted to a UE using dedicated signaling) so that a UE knows to which RAN area the cell belongs and thus whether it is still in the RNA. At present, no decision has been made as to whether to support one or both options, or maybe a different solution is agreed upon in the future.

### Paging Procedures in 5G NR

Although paging is not yet finally decided in 5G, it is assumed that there will be two different paging procedures in 5G NR, a RAN-based paging procedure (e.g. based on the RAN-based notification areas) and a core-network-based paging procedure, see for instance 3GPP TS 38.300 v15.0.0 referring to RAN paging and CN paging in several sections thereof, and being respectively incorporated herein by reference.

While in RRC_IDLE the UE monitors 5GC-initiated paging, in RRC_INACTIVE the UE is reachable via RAN-initiated paging and 5GC-initiated paging. RAN and 5GC paging occasions overlap and same paging mechanism is used. The UE monitors one paging occasion per DRX cycle for the reception of paging as follows:

The paging message currently being used in LTE is defined in 3GPP TS 36.331 v15.0.1 section 6.2.2 (see also section 5.3.2) incorporated herein by reference. With regard to 5G NR no definite paging message is defined yet, but it may be exemplarily assumed that the same or a similar paging message as currently employed in LTE will be used for 5G NR in the future. As apparent from the above cited TS 36.331, in LTE a paging message may include a paging record list with up to 16 paging records, each of which specifies the UE which is being paged within the paging message.

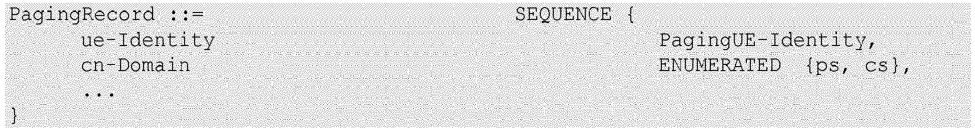

The UE-identity for paging can be e.g. a S-TMSI, IMSI (as in LTE) or may other UE identities, such as a new UE Identity in connection with the new RRC_Inactive state (namely the I-RNTI; Inactive-RNTI). According to current 3GPP discussions, the Inactive-RNTI could thus be used by the gNB specifically for RAN-based paging, whereas other UE IDs could be used for CN-based paging.

Although no final agreements have been reached for 5G NR in said respect, it can be assumed that paging is performed similar to LTE where paging is performed based on a PDCCH (DCI) with the CRC being scrambled by the P-RNTI (for LTE paging, see e.g. TS 36.213 v14.5.0 section 7.1 and TS 36.304 v14.5.0 section 7 both of which shall be incorporated herein by reference). The actual paging message with the paging record(s) is transmitted on the PDSCH, as indicated by the PDCCH DCI. As apparent from LTE, "P-RNTI transmitted on PDCCH" is for normal LTE; "P-RNTI transmitted on MPDCCH" is for eMTC; "P-RNTI transmitted on NPDCCH" is for NB-IoT. Exemplarily for 5G NR, eMBB could use normal PDCCH; mMTC could use separate PDCCH; URLLC, the same as eMBB or separate PDCCH could be used depending on future discussions.

There are and will be further agreements during 3GPP meetings and discussions further developing the RAN-based notification area (RNA) for the UEs and how they are defined and maintained. Particularly, the RNA of a UE shall be defined in an optimal way, e.g. so as to strike the right balance between the necessity of paging and the necessity of performing a lot of RNA update procedures. Consequently, there is a need for defining procedures that facilitate defining an optimal RNA for each UE that are unique in terms of service requirements and mobility patterns.

Moreover, an RNA that is already defined for a UE can change, specifically its composition, e.g. due to splitting and merging of radio cells of that RNA, to maintenance or failure of a radio cell of that RNA, or due to Xn removal (when a gNB tears down the Xn connection to one or more other gNBs e.g. due to load reasons). Consequently, in such circumstances it will be necessary to update the definition of the RNA, in order to avoid problems with the necessary RNA update procedure or paging procedure performed by and for the UE, which may incur unnecessary signaling and delays. There is a need to provide the necessary procedures to cope with such scenarios.

There is a further need to expedite the state transition from the new state RRC_Inactive to RRC_Connected so as to reduce time delays e.g. involved when transmitting or receiving that requires the UE to be in RRC_Connected state.

### Detailed description of present disclosure

In the following, UEs, base stations, and procedures to meet these needs will be described for the new radio access technology envisioned for the 5G mobile communication systems. Different implementations and variants will be explained as well. The following detailed disclosure was facilitated by the discussions and findings as described in the previous section "Basis of the present disclosure" and may for example be based at least on part thereof.

In general, it should be however noted that only some things have been actually agreed on with regard to the 5G cellular communication systems such that many assumptions have to be made in the following so as to be able to explain the principles underlying the present disclosure in a clear and understandable manner. These assumptions are however to be understood as merely examples that should not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current study items for 3GPP 5G, even though specific terminology to be used in the context of the new radio access technology for the next 3GPP 5G communication systems is not fully decided yet. Thus, terms could be changed in the 3GPP normative phase, without affecting the functioning of the embodiments of the invention. Consequently, a skilled person is aware that the invention and its scope of protection should not be restricted to particular terms exemplarily used herein for lack of newer or finally agreed terminology but should be more broadly understood in terms of functions and concepts that underlie the functioning and principles of the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently-used terminology for 5G NR is gNB.

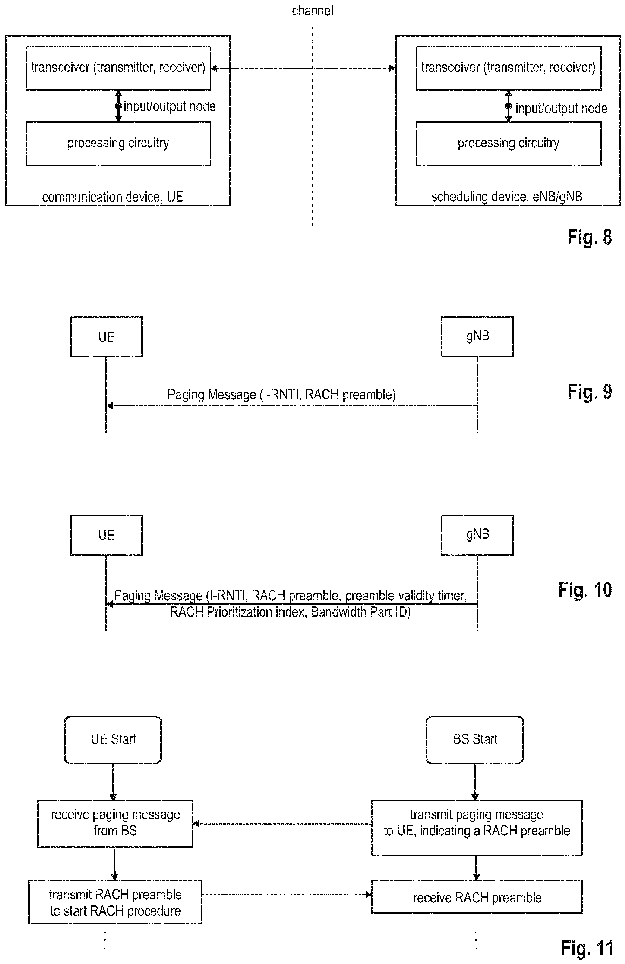

**Fig. 8** illustrates a general, simplified and exemplary block diagram of a user equipment (also termed communication device) and a scheduling device (here exemplarily assumed to be located in the base station, e.g. the eLTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto.

In the present case as will become apparent from the below description of the different embodiments and variants thereof, the processor can thus be exemplarily configured to control the transition between the different states the UE can be in, e.g. from RRC Inactive to RRC Connected or vice versa, or from/to RRC Idle. Another example refers to the processor determining whether and how to perform the random access procedure.

The transmitter in turn can be configured to be able to transmit the messages of the RACH procedure. Conversely, the receiver can in turn be configured to be able to receive messages of the RACH procedure, paging messages from the base stations, as well as system information broadcast by the base station.

### Embodiment 1

The first embodiment deals with the above-noted need to expedite the state change of the UE from the new inactive state to a fully connected state, so as to reduce the delay before subsequent actions can be performed by the UE. There may be several reasons why a UE shall move to a connected state, i.e. user data or control data is available in the downlink to be transmitted to the UE, or the UE would like to transmit data in the uplink. Transitioning from the inactive state to the connected state typically involves performing a random access procedure by the UE with the corresponding gNB. Consequently, by expediting the random access procedure, the time necessary for the state transition to RRC connected is also reduced.

An improved paging procedure will be described in the following that facilitates and expedites the state transition of the UE from an inactive state to a connected state, according to numerous variants of the first embodiment. In the following, a 4 step RACH procedure is assumed. However, it should be noted that solutions are equally possible where a two-step RACH procedure is performed, where the first message corresponds to the first and third messages of the 4 step RACH procedure, and the second message corresponds to the second and fourth messages of the 4 step RACH procedure.

The random access procedure is performed by the UE with the gNB based on several different parameters that may influence the chances for success as well as the time necessary to successfully complete the RACH procedure. For instance, the following parameters can be configured for performing the random access procedure:
- the radio resources (e.g. in the time/frequency domain) to be used for transmitting the RACH preamble,
- transmit power used for transmitting the RACH preamble,
- which RACH preamble,
- maximum number of preamble transmissions.

Moreover, the UE may perform a contention-based (e.g. Fig.3) or contention-free (e.g. Fig. 4) RACH procedure.

In order to expedite the state change to RRC_Connected, the gNB may provide parameters to the UE that expedite the RACH procedure. According to one option, the gNB, when paging the UE, can indicate a particular preamble to be used by the UE in the RACH procedure, such that the UE performs a contention-free random access procedure. Performing a contention-free RACH procedure may ensure that no collisions occur with other UEs, such the chances of success of the RACH procedure increases and thus the resulting time for the RACH procedure may decrease. In consequence, the necessary time to move from the RRC_Inactive state to the RRC_Connected state can be reduced as well.

**Fig. 9** illustrates the transmission of a paging message, including corresponding information relating to a particular RACH preamble, from the gNB to the UE. The RACH preamble is selected by the gNB to be specifically used by the UE, and could thus be considered to be UE-specific. The UE in turn performs the RACH procedure with the gNB, using the indicated RACH preamble. Correspondingly, the UE transmits the indicated RACH preamble to the gNB as part of the RACH procedure, which can then be continued in a usual manner.

**Fig. 11** is a diagram illustrating the steps to be performed by the UE and the gNB when participating in the improved procedure as discussed above.

According to other variants of the embodiment, performing the RACH procedure can be improved in a different manner as well. For instance, 5G NR has introduced the possibility of performing a prioritized RACH procedure, wherein some of the RACH parameters can be adapted to increase the priority with which the RACH procedure is performed between the UE and the gNB. In more detail, the transmission power and/or that backoff parameter and/or the random access response time window can be adapted for the prioritized random access procedure.

For example, in order to increase the priority of the RACH procedure to be performed by the UE, the transmission power employed by the UE for the RACH procedure (e.g. the transmission of the preamble) can be increased so as to increase the chances of success of the random access procedure and thus possibly reducing the time required to successfully finish the random access procedure, in turn reducing the time delay involved in transitioning from an inactive to a connected state. Particularly, the initial transmit power and/or the power ramping step size can be increased.

The priority of the RACH procedure can also be increased by reducing the backoff time (even reducing the backoff time to 0), such that the UE has to wait less or not at all after a failed RACH procedure before the next RACH procedure is attempted.

Shortening the random access response time window can also be used to increase the priority of the RACH procedure.

One possibility to implement the prioritized RACH procedure is to directly transmit the prioritized parameter(s) to the UE, e.g. indicating a particular transmission power or indicating a particular backoff time value that the UE shall use for the subsequent random access procedure. According to another possibility, it is exemplarily assumed that the random access parameters to be prioritized are respectively or in combination associated with corresponding indexes (could be termed exemplarily prioritization index or prioritization level). Then, based on a particular prioritization index, the UE can determine the corresponding random access parameter(s) associated therewith. This allows the gNB to transmit prioritization indexes (e.g. one for each transmission parameter to be prioritized, or one for a combination of random access parameters), instead of the actual random access parameter, to indicate prioritized random access parameter(s) to be used for the subsequent random access procedure.

In one example, the random access prioritization association can be defined by the gNB, and suitable information on the association between indexes and the random access parameters can be exchanged with the UE, e.g. using system information (e.g. minimum system information or in system-information-on demand) or using dedicated signalling messages (i.e. messages directly addressed to the UE, e.g. using RRC or MAC layer).

In line with the above explanations, **Fig. 10** illustrates the transmission of a paging message from the gNB to the UE, indicating not only the RACH preamble as explained before, but additionally including a RACH prioritization index that allows the UE to determine and then use certain prioritized random access parameters, such as a backoff time, a transmission power or a RAR time window.

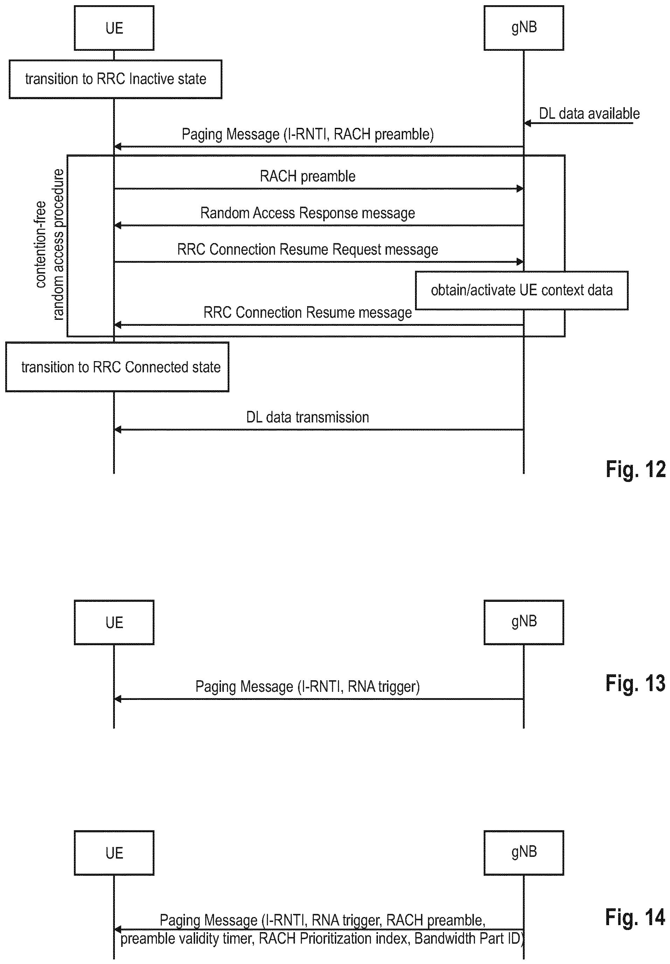

According to further variants of the embodiment, performing the RACH procedure can be improved in a different manner as well, namely by indicating a bandwidth part that the UE has to use, e.g. for performing the random access procedure. According to one example, the suspension and resume mechanism, involved in the state changes between the inactive and connected state, comprises that the UE and the gNB may store the AS (Access Stratum) contexts, including detailed information on the data radio bearers (DRB) as well as including the bandwidth part configuration. Correspondingly, if several bandwidth parts are already configured for the UE, the UE could initiate or get data on any of those bandwidth parts. In one variant, the bandwidth part for the uplink may be indicated already in the paging such that the UE already uses the indicated bandwidth for transmitting the random access preamble. In addition or alternatively, the bandwidth part for the downlink may be indicated already in the paging; it may thus be used to indicate the bandwidth part that shall be used when receiving downlink data from the gNB (see e.g. downlink data in Fig. 12). In line with the above, **Fig. 10** illustrates the transmission of the paging message from the gNB to the UE, indicating not only the RACH preamble as explained before, but additionally including a bandwidth part ID for the UL and/or the DL.

In either case, a gNB can provide the following information regarding a dedicated RACH preamble:
▪ Frequency location information
▪ Time location, if it is only a subset of all RACH symbols (e.g., PRACH mask)
▪ Associated SSB or CSI-RS information

According to another improvement of the above-described variants, a timer is used in connection with the UE-specific random access preamble indicated by the paging message. The timer can be used to restrict the time period that the UE is allowed to use the indicated random access preamble for performing a random access procedure. Correspondingly, the expedited random access procedure, based on the indicated random access preamble, is only available to the UE for a limited amount of time. The UE thus first determines whether the timer has expired and only then may use the indicated random access preamble for performing the random access procedure. In line with the above, **Fig. 10** illustrates the transmission of the paging message from the gNB to the UE, indicating not only the RACH preamble as explained before, but additionally indicating a timer value to restrict the validity of the indicated RACH preamble.

According to one exemplary implementation, the paging message already defined for LTE can be used for this embodiment and can be extended to include the various additional information elements discussed above. In more detail, the paging record can be extended to include the following information, where the additional elements are indicated in bold and underlined.

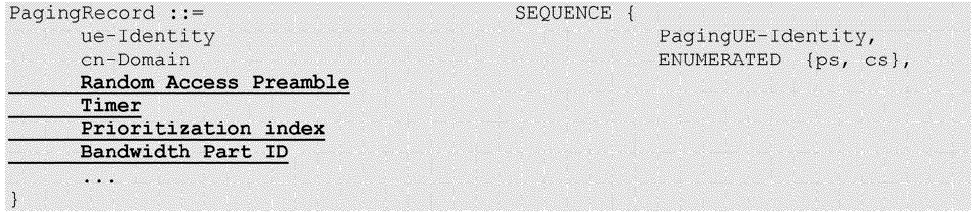

Exemplarily, the Random Access Preamble can be an integer, the timer can be an integer or enumerated value, the prioritization index can be an enumerated value, and the bandwidth part ID can be an integer.

**Fig. 12** illustrates a message exchanged according to a more detailed exemplary variant of the embodiment, illustrating the complete exchange during the random access procedure as well as the transition from the inactive to the connected state. In the variant illustrated in Fig. 12, it is exemplarily assumed that the UE is in an inactive state and that paging is triggered by downlink data becoming available at the gNB (mobile-terminated data), which is the anchor gNB in the UE's RNA. It is further assumed that the UE is currently connected to the anchor gNB. Consequently, in order to be able to provide downlink data to the UE, the gNB pages the UE.

At this point, the gNB may decide that the UE shall more rapidly enter the RRC Connected state, e.g. based on different circumstances such as the traffic QoS of the downlink data, the UE type, customer service and license agreement (SLA) etc. It is exemplarily assumed that the gNB decides to only prioritize the RACH procedure by indicating a specific RACH preamble. Similar to the solution explained in connection with Fig. 9, the paging message transmitted from the gNB to the UE indicates a particular random access preamble to be used by the UE in the subsequent random access procedure. In concordance with the exemplary four-step random access procedure illustrated in the background section, it is assumed that the UE transmits the indicated RACH preamble to the gNB as the first message of the random access procedure. Then, a random access response message is transmitted from the gNB to the UE, e.g. including an uplink resource assignment, whose resources can then be used by the UE to transmit the third message of the random access procedure (e.g. the RRC connection resume request message).

In the RRC Resume Request message, a UE may include a resume identifier or I-RNTI that may help a gNB to retrieve right UE context (from itself or from its 1-hop neighbours). On successfully retrieving UE context, a gNB can in response initiate RRC Connection Resume message.

After receiving the RRC Connection Resume message from the gNB, thereby finishing the RACH procedure, the UE will then transition to the RRC Connected state. On the network side, the transition of the UE to the RRC connected state may also involve the resuming of the previous connection between the UE and the gNB, i.e. activating the obtained UE context data, so as to then be able to transmit the downlink data to the UE.

The present embodiment accordingly provides suitable configured gNB(s) (base station) and UEs that can carry out the improved procedure according to any of the various implementations discussed above. The base station and UEs can contain units as exemplified in Fig. 8 to perform the tasks and steps necessary to participate in the embodiment.

### Embodiment 2

The second embodiment deals with the above-noted need for procedure(s) to handle scenarios where already defined RAN-based notification areas (RNA) change e.g. in that radio cells are added or removed from the RNA. The UE as well as the gNB operate based on a common understanding and definition of the UE-specific RNA, such that a change in the RNA composition (possibly detected by the gNB) may trigger an update procedure between the gNB and the UE according to the following explanations.

An improved paging procedure will be described in the following that facilitates the UE to obtain updated information on the RNA with which it is currently associated. It is exemplarily assumed that the UE has transitioned into an inactive state, which involves the definition of a UE-specific RAN-based notification area to handle UE mobility in that state. For instance, the gNB may define the RNA, based on information received from the AMF, such as the UE's registration area. The RNA is defined e.g. as a list of radio cells composing the RNA or as an RNA-ID or based on TAC that are broadcast by those cells.

Eventually, it is assumed that the RNA changes, e.g. a radio cell is no longer available due to failure or maintenance, or a radio cell is split such that two radio cells are available instead. The gNB notices that a radio cell gets removed or is added, and is aware of the UEs with an RNA that is affected by this change. The gNB will then transmit a paging message to the UE(s) in order to trigger a procedure in the UE to obtain updated information of the changed RNA.

**Fig. 13** illustrates the paging message, transmitted from the gNB to the UE, including a UE ID (here exemplarily the I-RNTI) as well as an RNA trigger. The RNA trigger will inform the UE that its RNA has changed and that the UE shall proceed to obtain updated information on the RNA.

The UE will in response perform one of several different procedures to obtain the updated information on the changed RNA, such that the RNA definition handled by the UE in the inactive state is again accurate. This avoids wrong behavior by the UE in connection with radio cells (and gNBs) that are no longer part of the RNA or that have been added to the RNA. For instance assuming that a new radio cell is added to the already defined RNA of the UE (e.g. due to radio cell splitting), the improved update procedure may avoid that the UE performs an RNA update procedure because it has the wrong understanding that the new radio cell (identified by its radio cell ID) is not within the (outdated) list of cells defining the RNA. Conversely, assuming that a radio cell of the already defined RNA of the UE undergoes maintenance and is no longer available, it is likely that a replacement radio cell will be setup with the same or another radio cell ID.

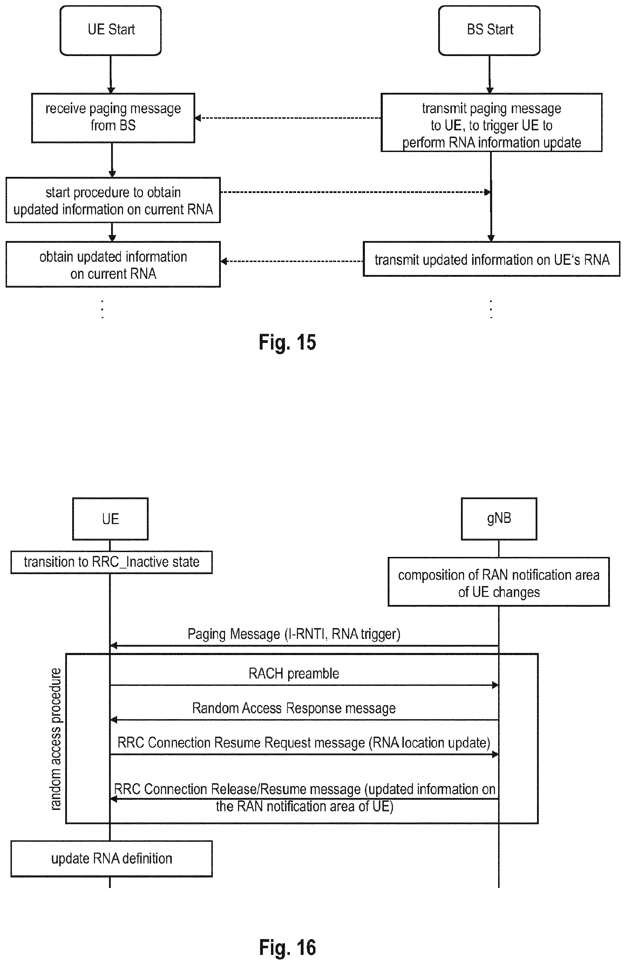

**Fig. 15** is a diagram illustrating the steps to be performed by the UE and the gNB when participating in the improved procedure as discussed above.

The RNA update trigger may be a simple flag, e.g. of one bit, which allows the UE - if present - to react accordingly by obtaining the updated information on the RNA.

According to one exemplary variant, the paging message includes the RNA update trigger as a new paging cause, similar to the SystemlnfoModification IE already known from LTE. The paging message definition could be extended to include the RNA update trigger as follows (see bold and underlined).

### Paging message

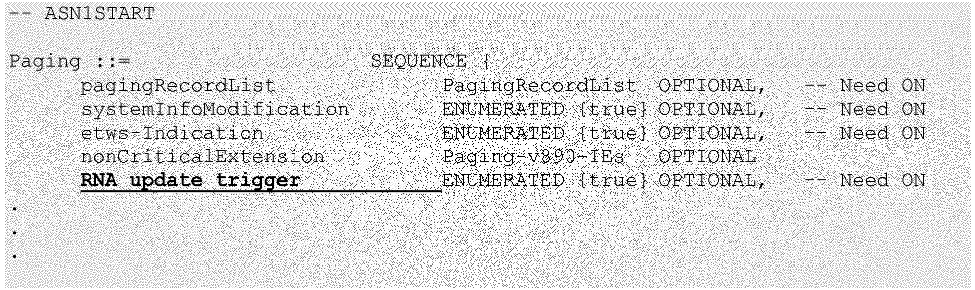

There are several solutions that can be used to allow the UE to obtain the updated information on the changed RNA.

According to one option, the UE may exceptionally perform an RNA location update procedure which allows the gNB to respond with information on the changed RNA composition. One exemplary variant of this option is illustrated in **Fig. 16**. As apparent therefrom, the UE - in response to the RNA trigger - may perform a RACH procedure with the gNB, including the transmission of the RACH preamble. The gNB receives the RACH preamble and responds appropriately with a RAR message, which assigns uplink resources to the UE. The UE may then use the assigned uplink resources to transmit the actual RNA location update (e.g. as part of the RRC Connection Resume Request message). The RNA location update may simply provide the ID of the radio cell the UE is currently located in.

When the gNB receives the RNA location update, including the radio cell ID, the gNB will determine that the UE should be provided with updated RNA information, and correspondingly includes appropriate information in message 4 of the RACH procedure (e.g. the RRC Connection Release message or the RRC Connection Resume message). Finally, the UE uses the received information to update its RNA definition. It is left open whether the gNB moves the UE to RRC_CONNECTED, or send the UE back to RRC_INACTIVE state or send the UE to RRC_IDLE.

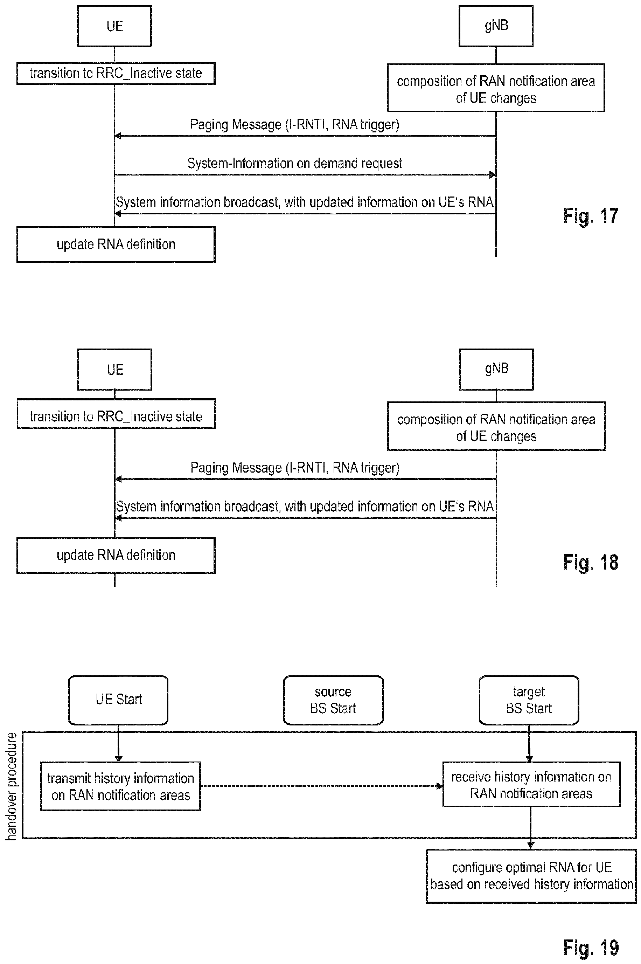

According to another option, the UE is provided with the updated RNA definition using system information. Two exemplary variants are illustrated in Fig. 17 and 18. **Fig. 17** illustrates the case where system information that is requested on demand by the UE is used by the gNB to carry the necessary information to update the RNA definition of the UE. In more detail, upon being paged with the RNA trigger, the UE will request system information with respect to the RNA definition. For instance, the request will indicate that system information is requested relating to the RAN notification area. The corresponding request for on-demand system information can be transmitted e.g. in a small message to the gNB, or using the RACH procedure (e.g. with a specific preamble or in MSG1 (with 1-bit) or MSG 3, such as the RRC Connection Resume Request message). Fig. 17 is not specific as to which particular message or procedure is used to carry the request for the on-demand system information.

The gNB receiving the SI-on-demand request can then broadcast the requested system information in its radio cell, including the necessary information to update the RNA definition. The UE will acquire the on-demand system information and will thus, using the received system information, update its RNA definition. Still alternatively, the on-demand system information can be transmitted within the fourth message of the RACH procedure, e.g. a RRC Connection Resume or Release message).

**Fig. 18** illustrates the case where minimum system information (where no separate request by the UE is needed) is used by the gNB to carry the necessary information to update the RNA definition of the UE. In said request, no further request is necessary from the UE, compared to the solution that is based on on-demand system information. Rather, the gNB will periodically broadcast system information, including the updated information on the RNA definition, such that the UE, upon receiving the RNA trigger with the paging message, acquires the necessary system information to update its RNA definition.

In any case, the UE will thus obtain the necessary information from the gNB and on that basis can update its RNA definition.

There are different possibilities which information needs to be provided by the gNB so as to allow the UE to properly update the current RNA definition of the UE. According to one option, the updated complete list of cells could be transmitted from the gNB to the UE. This might be possible e.g. when using dedicated signaling for carrying the information, e.g. as explained in connection with Fig. 16 (e.g. RRC Connection Resume or Release message of RACH procedure) or in connection with Fig. 17 (e.g. the on-demand system information within MSG4 of the RACH procedure). Since the complete list of cells is UE-specific, it may be - although possible - less apt to be carried by the (minimum) system information, which is broadcast and thus received by many UEs. If system information is still to be used, a corresponding UE ID could be additionally included in the system information broadcast so as to ensure that the RNA definition (i.e. complete list of cells) only applies to the specific, identified, UE. Moreover, a data overhead may be created, specifically in cases where the list of radio cell is large.

According to another option, only the relevant change could be communicated to the UE, such as the instruction to delete or add a radio cell with a corresponding radio cell ID. This option could be theoretically applied in all three solutions of Fig. 16-18. For instance, when a radio cell gets removed, all RNAs that include said radio cell need to be updated. The various gNBs are aware of the RNAs defined for the UEs in the respective radio cells, and if necessary can broadcast in the system information a corresponding instruction to remove the radio cell from any RNA definition. Since only those UEs will act on the received instruction that have indeed an RNA with the - now removed - radio cell, no specific addressing of the UEs is necessary in said respect. When a new radio cell needs to be added, if only specific UEs shall update their RNAs, it might be necessary for the gNB to specifically address the respective UEs that indeed have to update their RNAs to include the new radio cells.

Given that an RNA can encompass cells belonging to neighbor gNBs, the update has to be disseminated on Xn-interface too for neighbor gNBs to take respective actions within their own cells.

According to a further group of variants, the paging message may be extended not only with the RNA update trigger as explained above, but further and in a similar manner as explained for the first embodiment, with additional parameters such as the RACH preamble, the preamble validity timer, RACH prioritization index, bandwidth part ID. These separate parameters have been explained in detail with respect to the previous embodiment, and reference is made thereto. With the exception of the bandwidth part ID, the other parameters (i.e. the RACH preamble, preamble validity time, and RACH prioritization index) exclusively relate to performing the RACH procedure, and thus can be used by the gNB to prioritize and expedite the RACH procedure to be performed by the UE in several of the above solutions (e.g. solution of Fig. 16, or solution of Fig. 17 where the request for on-demand system information is transmitted within the random access procedure). On the other hand, the bandwidth part ID could be used by the gNB to indicate to the UE which bandwidth part (among various configured ones) can be used in the UL and/or DL, e.g. to transmit the RACH preamble, to receive the system information etc.

The present embodiment accordingly provides suitable configured gNB(s) (base station) and UEs that can carry out the improved procedure according to any of the various implementations discussed above. The base station and UEs can contain units as exemplified in Fig. 8 to perform the tasks and steps necessary to participate in the embodiment.

### Embodiment 3

The third embodiment deals with the above-noted need to facilitate the gNB to configure optimal RAN notification areas for UEs in inactive state. It is exemplarily assumed that RNAs are configured by the gNB, when the UE is transitioned to the RRC Inactive state.

A scenario is exemplarily assumed where the UE is in a connected state and eventually hands over from its current serving gNB (source gNB) to a target gNB. It is further exemplarily assumed that the UE has been one or more times in the inactive state and has correspondingly been configured by the current serving gNB (or other gNBs) with RAN-based notification area(s) to handle UE mobility in said state.

One goal is to provide the target gNB, which will eventually be configuring a new RNAfor the UE, with additional information to optimize the RNA configuration. This additional information shall relate to previous RNA configurations and can be exemplarily termed RNA history information.

The earliest point in time to provide said information is the time of handover from a source to the target gNB. During the handover procedure several messages are exchanged between the UE, source gNB and target gNB, some of which can be used to carry the RNA history information. Alternatively, the RNA history information could be provided to the target gNB (shortly) after the handover is completed, but still in time for the target gNB to be able to consider the RNA history information when configuring an RNA for the UE.

Some examples and more details are presented in the following. According to a first variant of this embodiment, the UE is the entity responsible for providing the RNA history information to the target gNB during the handover procedure. Accordingly, the UE continuously stores information on the RAN-based notification areas with which it has been configured, so as to then be able to provide this information to the target gNB. As part of the handover, the UE will synchronize with the new target gNB so as to complete its handover from the source to the target gNB. The synchronization with the target gNB could for instance be based on the RACH procedure, and the UE could use the third message of the random access procedure (e.g. the RRC Connection Reconfiguration Complete message) to carry the RNA history information to the target gNB.

**Fig. 19** exemplarily illustrates the corresponding steps performed by the UE and the target gNB to implement the improved configuration of RAN-based notification areas for UEs. The figure does not specify exactly which message is used, but exemplarily assumes that the provision of the RNA history information occurs during the handover procedure.

According to a second variant of this embodiment, the source gNB is the entity responsible for providing the RNA history information to the target gNB during the handover procedure. Accordingly, the source gNB stores information on the RAN-based notification areas with which the UE has been configured so far, so as to then be able to provide this information to the target gNB. This may involve that the source gNB stores information on the RAN-based notification areas configured by itself, and may optionally also involve that the source gNB stores information on RAN-based notification areas that were configured by previous serving gNBs. The latter information on RNA configured by previous serving gNBs can be in turn obtained by the current serving gNB e.g. from a previous gNB or the UE in a similar or same manner as discussed for providing RNA history information to the target gNB.

As part of the handover procedure, the source gNB will request the handover to the target gNB, e.g. using a handover request message, which can be used by the source gNB to transport the RNA history information.

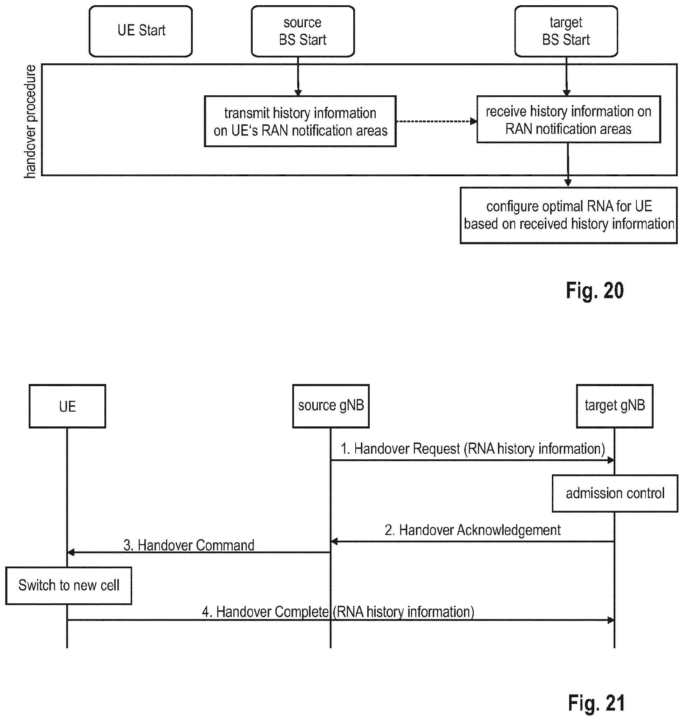

**Fig. 20** exemplarily illustrates the corresponding steps performed by the source gNB and the target gNB to implement the improved configuration of RAN-based notification areas for UEs. The figure does not specify exactly which message is used, but exemplarily assumes that the provision of the RNA history information occurs during the handover procedure.

**Fig. 21** illustrates an exemplary high-level handover procedure according to current definitions in 3GPP TS 38.300 v 15.0.0 section 9.2.3, which is incorporated herein by reference. Fig. 21 illustrates the elemental components of an inter-gNB handover:
1. The source gNB initiates the handover and issues a Handover Request over the Xn interface to the possible new target gNB.
2. The target gNB performs admission control and provides the RRC configuration as part of the Handover Acknowledgement.
3. The source gNB provides the RRC configuration to the UE in the Handover Command message. Exemplarily, the Handover Command message includes at least cell ID and all information required to access the target cell so that the UE can access the target cell without reading system information. For some cases, the information required for contention based and contention free random access can be included in the Handover Command message. The access information to the target cell may include beam specific information, if any.
4. The UE moves the RRC connection to the target gNB and replies the Handover Complete.

Fig. 21 also illustrates the UE-based and network-based solutions discussed above, i.e. the RNA history information can be transmitted from the source gNB to the target gNB in the handover request message, and the RNA history information can be transmitted by the UE to the target gNB with the handover completion (e.g. using the RRC Connection Reconfiguration Complete message).

There are several possibilities on which information the RNA history may actually contain. According to one example, the RNA history information may contain the definition of one or more RAN notification areas with which the UE was configured so far, e.g. for each RNA the corresponding list of cells composing said RNA, or a list of RAN Area IDs, or list of TAIs can be included.

Optionally, the RNA history information may further include for each RNA the corresponding anchor gNB ID of that gNB that was the anchor for the identified RNA. Inclusion of the old anchor gNB can help the new gNB to understand earlier RNA configurations in terms of reachability. In case an old anchor gNB is multiple hops away, a new anchor has to fetch a UE context either using multi-hop Xn-based RETRIEVE UE CONTEXT kind of mechanism or from an AMF

Optionally, the RNA history information may further include for each RNA a hop indication which indicates the number of hops between the target base station (or source base station, i.e. hops relating to target base station -1) and the anchor base station relating to said RNA (see above). A hop can be understood herein as the connection between two entities, such that two gNBs that are connected via two hops are not connected directly but can reach one another via e.g. another gNB that is in turn directly connected to both of these two gNBs. One hop indicates that two gNBs are directly connected with one another. If the new gNB configures the UE-specific RNA while enlisting gNBs that are multiple hops away, it may also have to store UE context with an AMF too.

The UE-specific RNA history information could exemplarily have the following format.

```
 RAN-NotificationArealnfo         ::= CHOICE {
              -- Option 1
 cellist SEQUENCE (SIZE (1..FFS)) OF CellGloballdNR,
 Anchor gNB ID Global gNB identifier
 }
 RAN-NotificationArealnfoList ::= SEQUENCE (SIZE (1..max RAN-NotificationArealnfo))
                                 OF RAN-NotificationArealnfo
```

The target gNB with the additional information provided in the RNA history information has more information at its disposal to configure an optimal RNA for the UE. For instance, the gNB can include particular gNBs in the new RNA, such as the previous anchor gNBs, that are of particular interest to the UE. The gNB may also avoid including gNBs in the new RNA that are too many hops away from itself. With UE-based history information that can tell how long a UE spends in each cell, a target gNB can include some cells from earlier configured RNA with a new RNA if it is predicted from UE history that a UE will move around those old cells constantly (e.g. pizza delivery person). The intention is to configure more optimal RNA for a given UE so that unnecessary paging to locate a UE or mobility-driven RNAU can be minimized.

The present embodiment accordingly provides suitable configured gNB(s) (base station) and UEs that can carry out the improved procedure according to any of the various implementations discussed above. The base station and UEs can contain units as exemplified in Fig. 8 to perform the tasks and steps necessary to participate in the embodiment.

### Further Aspects

According to a first aspect, a user equipment is provided comprising a receiver that receives a paging message from a base station that controls a radio cell of a mobile communication system in which the user equipment is located, the paging message indicating a random access preamble to be used by the user equipment when performing a random access procedure with the base station. A transmitter of the UE transmits the indicated random access preamble to the base station as part of a random access procedure performed by the user equipment with the base station.

According to a second aspect provided in addition to the first aspect, the paging message further indicates that downlink data is available at the base station to be transmitted to the user equipment. The user equipment is in an inactive state, out of an idle state, a connected state and the inactivate state the user equipment can be in. A processor upon finishing the random access procedure transitions from the inactive state to the connected state so as to receive downlink data available at the base station. The receiver, when in operation, after transitioning to the connected state, receives the downlink data from the base station.

According to a third aspect provided in addition to the first or second aspect, the paging message further indicates a preamble validity timer value that indicates for how long the user equipment can use the indicated random access preamble for performing the random access procedure with the base station. Optionally, the processor determines whether to use the received random access preamble when performing a random access procedure based on the received preamble validity timer value.

According to a fourth aspect provided in addition to any of first to third aspects, the paging message further indicates a random access prioritization level for performing the random access procedure with the base station. Optionally, the processor determines random access parameters to be used for performing the random access procedure based on the indicated random access prioritization level. Optionally, the random access parameters comprise one or more of:
- a back-off time, based on which a minimum time period is determined that the user equipment has to wait between two random access procedures,
- transmission power parameters, to be used by the user equipment when determining transmission power for transmitting messages of the random access procedure,
- a random access response time window, during which the user equipment may validly receive a random access response message from the base station in response to the transmission of a random access preamble previously transmitted by the user equipment.

Optionally, the processor determining by the processor the random access parameters based on the indicated random access prioritization level is further based on association information indicating which random access parameters are associated with which random access prioritization level. Optionally, the receiver, when in operation, receives the association information via system information broadcasts from the base station or via a dedicated message from the base station.

According to a fifth aspect provided in addition to any of the first to fourth aspects, the paging message further indicates a frequency bandwidth part within a system frequency bandwidth of the radio cell. The processor determines a frequency bandwidth part to be used for performing the random access procedure based on the indicated frequency bandwidth part. Optionally, the processor, when determining the frequency bandwidth part, determines a first frequency bandwidth part for the uplink and/or a second frequency bandwidth part for the downlink.

According to a sixth aspect provided in addition to any of the first to fifth aspects, the random access procedure, performed by the user equipment using the indicated random access preamble, is a contention-free random access procedure.

According to a seventh aspect, a method is provided comprising the following steps performed by a user equipment. A paging message is received from a base station that controls a radio cell of a mobile communication system in which the user equipment is located, the paging message indicating a random access preamble to be used by the user equipment when performing a random access procedure with the base station. The indicated random access preamble is transmitted to the base station as part of a random access procedure performed by the user equipment with the base station.

According to an eighth aspect, the base station is provided that comprises a transmitter that transmits a paging message to a user equipment which is located in a radio cell of a mobile communication system that is controlled by the base station, wherein the paging message indicates a random access preamble to be used by the user equipment when performing a random access procedure with the base station. A receiver of the base station receives the indicated random access preamble from the user equipment as part of a random access procedure performed by the user equipment with the base station.

According to a ninth aspect, a user equipment is provided comprising a receiver that receives a paging message from a base station that controls a radio cell of a mobile communication system in which the user equipment is located, the paging message comprising a trigger for the user equipment to obtain updated information on a radio access network notification area within which the user equipment is located. The receiver in response to the received trigger performs a procedure to obtain the updated information on the radio access network notification area.

According to a tenth aspect provided in addition to the ninth aspect, the procedure to obtain updated information comprises that:
- the transmitter, when in operation, transmits a location update message to the base station, the location update message including information on the current location of the user equipment with respect to the radio access network notification area, and
- the receiver, when in operation, receives an area update message from the base station with the updated information on the radio access network notification area within which the user equipment is located.

Optionally, the location update message is a message of a random access procedure performed between the user equipment and the base station, optionally the third message of the random access procedure. Optionally, the area update message is a message of a random access procedure performed between the user equipment and the base station, optionally the fourth message of the random access procedure.

According to an eleventh aspect provided in addition to the ninth or tenth aspect, the procedure to obtain updated information comprises that:
- the transmitter, when in operation, transmits a system information request message to the base station to request system information regarding the radio access network notification area,
- the receiver, when in operation, receives a system information message from the base station, including the updated information on the radio access network notification area within which the user equipment is located.

Optionally, the system information request message is a message of a random access procedure performed between the user equipment and the base station, optionally the first or third message of the random access procedure. Optionally, the system information message is a message of a random access procedure performed between the user equipment and the base station. Optionally, the fourth message of the random access procedure, or wherein the system information message is a system information message broadcast by the base station.

According to a twelfth aspect in addition to any of the ninth to eleventh aspects , the procedure to obtain updated information comprises that the receiver, when in operation, receives system information that is periodically broadcast by the base station in the radio cell.

According to a thirteenth aspect provided in addition to any of the ninth to the twelfth aspects, the updated information on the radio access network notification area identifies the radio cells composing the updated radio access network notification area. In addition or alternatively the updated information on the radio access network notification area comprises an indication as to which radio cell(s) have to be deleted from or added to the radio access network notification area so as to obtain an updated radio access network notification area.

According to a fourteenth aspect provided in addition to any of the ninth to thirteenth aspects, the trigger is a one-bit indication. In addition or alternatively, the user equipment is in an inactive state, out of an idle state, a connected state and the inactivate state the user equipment can be in.

According to a fifteenth aspect provided in addition to any of the ninth to fourteenth aspects, the paging message further indicates one or more of:
- a random access preamble to be used by the user equipment when performing a random access procedure with the base station, optionally a preamble validity timer value that indicates for how long the user equipment can use the indicated random access preamble for performing the random access procedure with the base station,
- a frequency bandwidth part within a system frequency bandwidth of the radio cell, to be used by the user equipment for performing the random access procedure,
- a random access prioritization level for performing the random access procedure with the base station, to be used by the user equipment to determine random access parameters for performing the random access procedure such as one or more of a back-off time, transmission power parameters, and a random access response time window.

According to a sixteenth aspect, a method is provided comprising the following steps performed by a user equipment. A paging message is received from a base station that controls a radio cell of a mobile communication system in which the user equipment is located, the paging message comprising a trigger for the user equipment to obtain updated information on a radio access network notification area within which the user equipment is located. A procedure is performed to obtain the updated information on the radio access network notification area.

According to a seventeenth aspect, a base station is provided comprising a transmitter that transmits a paging message to a user equipment which is located in a radio cell of a mobile communication system that is controlled by the base station, the paging message comprising a trigger for the user equipment to obtain updated information on a radio access network notification area within which the user equipment is located. The transmitter transmits the updated information on the radio access network notification area to the user equipment.

According to an eighteenth aspect a user equipment is provided that comprises a transmitter that transmits to a target base station history information, wherein the user equipment is located in a radio cell controlled by a source base station and performs a handover procedure from the source base station to the target base station, wherein the history information provides information with respect to one or more radio access network notification areas, RNAs, in which the user equipment was located.

According to a nineteenth aspect, provided in addition to the eighteenth aspect, the history information further comprises, for each RNA, information of the anchor base station that acted as anchor to the user equipment when located in the respective RNA.

According to a twentieth aspect, provided in addition to the eighteenth or nineteenth aspect, the history information further comprises, for each RNA, a hop count indicating the number of hops between the target base station and the anchor base station that acted as anchor to the user equipment when located in the respective RNA.

According to a 21st aspect, provided in addition to any of the eighteenth to twentieth aspects, the history information is transmitted by the user equipment within a Radio Resource Control, RRC, Connection Reconfiguration complete message that completes execution of the handover procedure from the source base station to the target base station.

According to a 22th aspect, a method is provided comprising the following steps performed by a user equipment. History information is transmitted to a target base station, wherein the user equipment is located in a radio cell controlled by a source base station and performs a handover procedure from the source base station to the target base station, wherein the history information provides information with respect to one or more radio access network notification areas, RNAs, in which the user equipment was located.

According to a 23^{rd} aspect, a base station is provided comprising a transmitter that transmits history information to a target base station, wherein a handover procedure is performed for handing over a user equipment from the base station, as the source base station, to the target base station, wherein the history information provides information with respect to one or more radio access network notification areas, RNAs, in which the user equipment was located.

According to a 24^{th} aspect, provided in addition to the 23^{rd} aspect, the history information is transmitted by the source base station within a handover request message that requests the target base station to be the destination of the handover of the user equipment.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

## Claims

1. A user equipment comprising:
a receiver, which in operation, receives a paging message from a base station that controls a radio cell of a mobile communication system in which the user equipment is located, the paging message indicating a random access preamble to be used by the user equipment when performing a random access procedure with the base station, and
a transmitter, which in operation, transmits the indicated random access preamble to the base station as part of a random access procedure performed by the user equipment with the base station.

2. The user equipment according to claim 1, wherein the paging message further indicates that downlink data is available at the base station to be transmitted to the user equipment, wherein the user equipment is in an inactive state, out of an idle state, a connected state and the inactivate state the user equipment can be in,
wherein a processor, when in operation and upon finishing the random access procedure, transitions from the inactive state to the connected state so as to receive downlink data available at the base station,
wherein the receiver, when in operation, after transitioning to the connected state, receives the downlink data from the base station.

3. The user equipment according to claim 1 or 2, wherein the paging message further indicates a preamble validity timer value that indicates for how long the user equipment can use the indicated random access preamble for performing the random access procedure with the base station, and
optionally wherein the processor, when in operation, determines whether to use the received random access preamble when performing a random access procedure based on the received preamble validity timer value.

4. The user equipment according to one of claims 1 to 3, wherein the paging message further indicates a random access prioritization level for performing the random access procedure with the base station,
optionally wherein the processor determines random access parameters to be used for performing the random access procedure based on the indicated random access prioritization level,
optionally wherein the random access parameters comprise one or more of:
• a back-off time, based on which a minimum time period is determined that the user equipment has to wait between two random access procedures,
• transmission power parameters, to be used by the user equipment when determining transmission power for transmitting messages of the random access procedure,
• a random access response time window, during which the user equipment may validly receive a random access response message from the base station in response to the transmission of a random access preamble previously transmitted by the user equipment, and
optionally wherein the processor determining by the processor the random access parameters based on the indicated random access prioritization level is further based on association information indicating which random access parameters are associated with which random access prioritization level, optionally wherein the receiver, when in operation, receives the association information via system information broadcasts from the base station or via a dedicated message from the base station.

5. The user equipment according to one of claims 1 to 4, wherein the paging message further indicates a frequency bandwidth part within a system frequency bandwidth of the radio cell, wherein the processor, when in operation, determines a frequency bandwidth part to be used for performing the random access procedure based on the indicated frequency bandwidth part,
optionally wherein the processor, when determining the frequency bandwidth part, determines a first frequency bandwidth part for the uplink and/or a second frequency bandwidth part for the downlink.

6. A base station comprising:
a transmitter, which in operation, transmits a paging message to a user equipment which is located in a radio cell of a mobile communication system that is controlled by the base station, wherein the paging message indicates a random access preamble to be used by the user equipment when performing a random access procedure with the base station,
a receiver, which in operation, receives the indicated random access preamble from the user equipment as part of a random access procedure performed by the user equipment with the base station.

7. A user equipment comprising:
a receiver, which in operation, receives a paging message from a base station that controls a radio cell of a mobile communication system in which the user equipment is located, the paging message comprising a trigger for the user equipment to obtain updated information on a radio access network notification area within which the user equipment is located, and
a receiver, which in operation and in response to the received trigger, performs a procedure to obtain the updated information on the radio access network notification area.

8. The user equipment according to claim 7, wherein the procedure to obtain updated information comprises that:
• the transmitter, when in operation, transmits a location update message to the base station, the location update message including information on the current location of the user equipment with respect to the radio access network notification area, and
• the receiver, when in operation, receives an area update message from the base station with the updated information on the radio access network notification area within which the user equipment is located,
optionally wherein the location update message is a message of a random access procedure performed between the user equipment and the base station, optionally the third message of the random access procedure,
optionally wherein the area update message is a message of a random access procedure performed between the user equipment and the base station, optionally the fourth message of the random access procedure.

9. The user equipment according to claim 7 or 8, wherein the procedure to obtain updated information comprises that:
• the transmitter, when in operation, transmits a system information request message to the base station to request system information regarding the radio access network notification area,
• the receiver, when in operation, receives a system information message from the base station, including the updated information on the radio access network notification area within which the user equipment is located,
optionally wherein the system information request message is a message of a random access procedure performed between the user equipment and the base station, optionally the first or third message of the random access procedure,
optionally wherein the system information message is a message of a random access procedure performed between the user equipment and the base station, optionally the fourth message of the random access procedure, or wherein the system information message is a system information message broadcast by the base station.

10. The user equipment according to one of claims 7 to 9, wherein the procedure to obtain updated information comprises that the receiver, when in operation, receives system information that is periodically broadcast by the base station in the radio cell.

11. A base station comprising:
a transmitter, which in operation, transmits a paging message to a user equipment which is located in a radio cell of a mobile communication system that is controlled by the base station, the paging message comprising a trigger for the user equipment to obtain updated information on a radio access network notification area within which the user equipment is located, and
the transmitter, which in operation, transmits the updated information on the radio access network notification area to the user equipment.

12. A user equipment comprising:
a transmitter, which in operation, transmits to a target base station history information, wherein the user equipment is located in a radio cell controlled by a source base station and performs a handover procedure from the source base station to the target base station, wherein the history information provides information with respect to one or more radio access network notification areas, RNAs, in which the user equipment was located.

13. The user equipment according to claim 12, wherein the history information further comprises, for each RNA, information of the anchor base station that acted as anchor to the user equipment when located in the respective RNA.

14. The user equipment according to claim 12 or 13, wherein the history information is transmitted by the user equipment within a Radio Resource Control, RRC, Connection Reconfiguration complete message that completes execution of the handover procedure from the source base station to the target base station.

15. A base station comprising:
a transmitter, which in operation, transmits history information to a target base station, wherein a handover procedure is performed for handing over a user equipment from the base station, as the source base station, to the target base station, wherein the history information provides information with respect to one or more radio access network notification areas, RNAs, in which the user equipment was located.
